# EUROPÄISCHE PATENTANMELDUNG

(11) **EP 3 381 777 A1**
(43) Veröffentlichungstag der Anmeldung: **03.10.2018**
(21) Anmeldenummer: 18162506.2
(22) Anmeldetag: 19.03.2018
(51) Int. Cl.: B62K 3/00, B62J 25/00

(54) **TRETROLLER**

(30) Priorität: 31.03.2017 DE 102017107035
(71) Anmelder: Abel, Helmut, 78600 Maisons-Laffitte (FR)
(72) Erfinder: Abel, Helmut, 78600 Maisons-Laffitte (FR); Abel, Diane, 78600 Maisons-Laffitte (FR); Abel, Céline, 78600 Maisons-Laffitte (FR)
(74) Vertreter: Westphal, Mussgnug & Partner Patentanwälte mbB

(57) **Zusammenfassung**

Die Erfindung bezieht sich auf einen Tretroller mit einem sehr kurzen, kompakten Trittbrett (1), dessen vordere Breite der Breite zweier nebeneinander auf das Trittbrett (1) gestellter Füße (14, 15) und dessen Trittflächenlänge der Länge der Füße (14, 15) des Fahrers entspricht. An seinem vorderen Ende weist das Trittbrett (1) symmetrisch zur Steuersäule (2) bzw. der Mittellinie (M) seitlich abstehende Flügel (11, 11') als Fußauflagen auf.

## Beschreibung

Tretroller dieser Art sind an sich seit Jahrhunderten bekannt und in vielen Druckschriften in unterschiedlichsten Versionen beschrieben. Sie werden auch heute noch von Kindern und Jugendlichen zu Spielzwecken und zunehmend auch von Erwachsenen im täglichen Verkehr und sogar für gewerbliche Zwecke benutzt.

An ihrem Aufbau und insbesondere ihrer Benutzungsweise hat sich dennoch nicht allzuviel geändert.

Beim Dahinrollen, also Fahren ohne Abstoß, steht der Fahrer mit seinem Standfuß vorn auf dem Trittbrett, während sein Abstoßfuß in jeweils kurzzeitiger Ruhestellung hinten auf dem schmalen Trittbrett steht, etwa in Linie hinter seinem Standfuß.

In dieser Position, in welcher der Fahrer mit beiden Füßen auf dem in der Regel schmalen Trittbrett steht, hat er nur eine schlechte seitliche Standsicherheit. Deshalb ist er gezwungen, sich stets mit beiden Händen an der horizontalen Lenkstange festzuhalten und sich auf dieser auch abzustützen.

Ein weiterer, recht entscheidender Nachteil des herkömmlichen Tretrollers ist Folgender.

Bei freifahrenden Tretrollern steht der Fahrer zwar mittig vor der Steuersäule, neigt sich jedoch bei jedem Abstoßvorgang zur Seite und gelangt in eine seitliche Schräglage, zumal bei den üblichen Tretrollern die Trittfläche der Trittbretter konstruktionsbedingt relativ hoch liegt. Das hat zur Folge, dass sich der Fahrer bei jedem Abstoßvorgang als Gegenmaßnahme mit seiner gegenüberliegenden Hand an der Lenkstange abstützen muss. Dadurch wird das Lenken des Tretrollers unruhig und ungenau, wobei das Abstoßen erschwert ist. Ferner muss der Fahrer nach jedem Abstoßvorgang sich aus der Schräglage wieder nach oben bewegen, um dann erneut mittig vor der Steuersäule zu stehen. Das Fahren mit den herkömmlichen Tretrollern ist darum vor allem für Erwachsene mit höherem Körpergewicht, insbesondere bei längeren Fahrtstrecken, recht ermüdend.

Der vorliegenden Erfindung liegt die Aufgabe zugrunde, die Konstruktion des Tretrollers grundlegend so zu ändern, dass die genannten Nachteile vermieden werden, sodass der Fahrer mit dem Tretroller bequem und sicher stehend problemlos fahren kann.

Gelöst wird diese Aufgabe durch die mit den in Anspruch 1 angegebenen Maßnahmen.

Zum einen soll die vordere Breite des Trittbrettes der Breite zweier nebeneinander auf das Trittbrett gestellter Füße und die Länge der Trittfläche des Trittbrettes der Länge der Füße des Fahrers entsprechen.

Es ist hierbei von einer durchschnittlichen Größe eines Fußes auszugehen. Auch ist denkbar, für bestimmte Fußgrößen oder Bereiche von Fußgrößen angepasste Trittbretter zu vorzusehen.

Hierdurch entsteht ein kurzer und kompakter Tretroller, der zum einen ein sicheres Fahren sowohl beim freien Dahinrollen als auch beim Abstoßen ermöglicht und zum andern wegen seiner Kürze z. B. in öffentlichen Verkehrsmitteln gut zu transportieren ist.

Nach einem weiteren Merkmal sind am vorderen Ende des Trittbrettes symmetrisch zur Steuersäule seitlich abstehende Flügel vorgesehen, welche als Fußauflagen dienen. Auf diesen stützt sich der Fahrer insbesondere beim Abstoßen mit dem gegenüberliegenden Fuß ab, sodass der Roller anders als bei herkömmlichen Tretrollern weniger in eine Schräglage gelangt.

Wie ferner vorgeschlagen ist, sollen die Flügel gegenüber der zentralen Trittbrettfläche derart nach oben abgewinkelt sein, dass sie den schräg gestellten Tretroller, wenn er geparkt wird, abstützen, wobei sie in Schräglage bei Kurvenfahrten die Fahrbahn jedoch nicht berühren sollen. Ein Winkel von etwa 8° hat sich, wie mit Anspruch 2 vorgeschlagen, hierbei als vorteilhaft erwiesen. Mit dieser Konstruktionsmaßnahme erübrigt sich die Verwendung der sonst üblichen Stützen.

Damit der Stoßfuß des Fahrers beim Abstoßen möglichst nahe an der Mittellinie des Trittbrettes bleiben kann, soll sich das Trittbrett nach einem weiteren Merkmal in dem sich an die Flügel anschließenden Bereich nach hinten verjüngen.

Der weiteren Verkürzung des Tretrollers dient der Vorschlag nach Anspruch 3, nach welchem das Trittbrett in seinem vorderen Bereich eine halbkreisförmige Aussparung aufweist, die als Freiraum für das in einer Gabel der Steuersäule drehbar gelagerte Lenkrad dient.

Mit dem gleichen Ziel weist das Trittbrett gemäß Anspruch 4 in seinem hinteren Bereich eine Ausnehmung auf, in welcher das in einer Gabel drehbar gelagerte hintere Laufrad angeordnet ist. Bei Realisierung der mit der Erfindung vorgeschlagenen Maßnahmen haben sich die mit Anspruch 5 vorgeschlagenen Abmessungen als besonders geeignet erwiesen.

Ein Tretroller mit Trittbrettbreiten von 250 mm im vorderen Bereich und 100 mm im hinteren Bereich ist für Fahrer mit allen Schuhgrößen bis zu Schuhgröße 47 problemlos benutzbar. Es müssen darum nicht Tretroller verschiedener Größen angeboten werden.

Wegen der langen Bauweise erfordern die Trittbretter herkömmlicher Tretroller eine gewisse Stärke oder unterhalb des Trittbrettes angeordnete Verstärkungen, mit welchen die langen Trittbretter gegen Durchbiegung oder Bruch geschützt werden. Auch muss genügend Abstand zwischen der Trittbrettunterfläche und der Fahrbahn vorhanden sein.

Dies ist bei den mit der Erfindung vorgeschlagenen kürzeren Trittbretter nicht notwendig, sodass diese, wie mit Anspruch 6 vorgeschlagen, aus dünnwandigem, vorzugsweise 8 mm starken, Duraluminium gefertigt werden können. Hierdurch kann der Abstand der Unterseite des Trittbrettes von der Fahrbahn reduziert werden, was wegen des tiefer gelegten Schwerpunktes zu einer Verbesserung der Straßenlage führt.

Der Gegenstand der Erfindung ist nachstehend anhand zweier Ausführungsbeispiele im Einzelnen erläutert. Die in den Zeichnungen maßstabsgerecht dargestellten Tretroller entsprechen erprobten Prototypen. In den Zeichnungen zeigen:
- Fig. 1: eine teilweise geschnittene Draufsicht des erfindungsgemäßen Tretrollers in einer ersten Ausführungsform,
- Fig. 2: teilweise geschnittene Draufsicht des erfindungsgemäßen Tretrollers nach einer zweiten Ausführungsform,

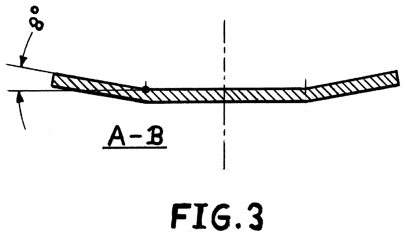

- Fig. 3: Schnitt längs der Linie A - B in Figur 2 und

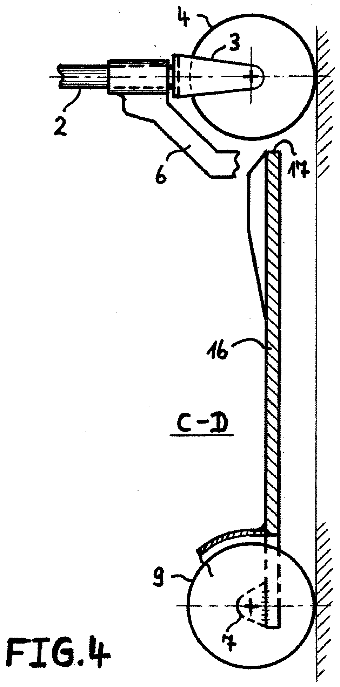

- Fig. 4: Schnitt längs der Linie C - D in Figur 2.

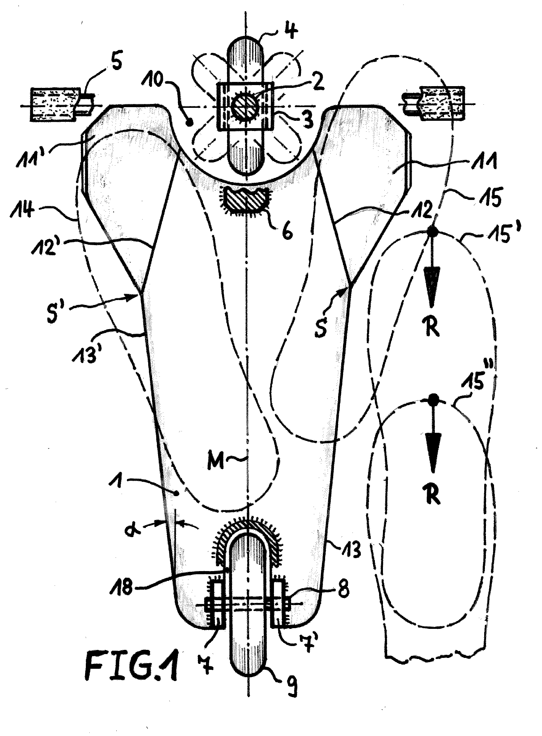

Wie Figur 1 zeigt, besteht der erfindungsgemäße Tretroller im Wesentlichen aus einem Trittbrett 1, einer in der Regel senkrechten Steuersäule 2 mit einer Radgabel 3, in welcher das vordere Laufrad 4 gelagert ist, einer nur angedeuteten horizontalen Lenkstange 5 und einer hinteren Gabel 7, 7', welcher die Achse 8 für das hintere Laufrad 9 trägt, das eine Ausnehmung 18 des Trittbrettes 1 durchsetzt. Das Lager für die Steuersäule 2 ist mit einer Strebe 6 mit dem Trittbrett 1 verbunden. Am vorderen Ende des Trittbrettes 1 sind symmetrisch zur Steuersäule 2 bzw. der Mittellinie M seitlich abstehende Flügel 11, 11' vorgesehen, welche längs der Knicklinien 12, 12' um ca. 8° nach oben abgebogen sind. Die Knicklinien 12, 12' schneiden die seitlichen Trittbrettränder 13, 13' in den Schnittpunkten S, S'. Bis zu den Schnittpunkten S, S' entspricht die Breite des Trittbrettes 1 der Breite zweier nebeneinander auf das Trittbrett 1 gestellter Füße des Fahrers, die mit den Konturen 14, 15 angedeutet sind.

Die Länge L der Trittfläche des Trittbrettes 1, also die nutzbare Fläche des Trittbrettes 1, auf welcher der Fahrer steht, entspricht etwa der Länge der Füße des Fahrers.

Beginnend mit den Schnittpunkten S, S' verjüngt sich das Trittbrett 1 auf beiden Seiten nach hinten um den Winkel α, der bei dieser Gestaltung 6° beträgt. Hierdurch entsteht beidseitig des hinteren Endes des Trittbrettes 1 ein Freiraum für den Stoßfuß des Fahrers, der in seinen unterschiedlichen Positionen mit den gestrichelten Konturen 15, 15', 15'' und der Stoßrichtung R angedeutet ist.

Die erfindungsgemäßen Maßnahmen ermöglichen die Konstruktion eines kleinen, sehr kurzen und kompakten Tretrollers, der sich für Fahrer aller Altersklassen und sogar für große, schwergewichtige Fahrer eignet.

Eine besonders kurze Gestaltung ergibt sich, wenn, wie das Ausführungsbeispiel gemäß Figur 1 zeigt, das Trittbrett 1 in seinem vorderen Bereich eine halbkreisförmige Aussparung 10 für das vordere Laufrad 4 aufweist. So kann eine Gesamtlänge von etwa 550 mm erzielt werden. Da das Trittbrett 1, das vorzugsweise aus Duraluminium besteht, sehr dünn, vorzugsweise 8 mm stark ist, ist der Abstand zwischen der Trittbrettunterseite und der Fahrbahn sehr gering. Er kann z. B. nur 30 mm betragen.

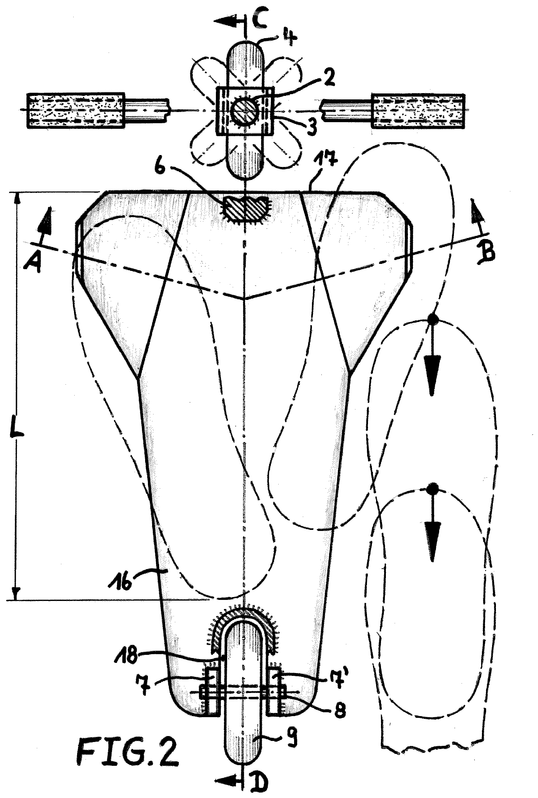

Geringfügig länger ist der Tretroller bei dem Ausführungsbeispiel nach Figur 2, bei welcher die bei dem Ausführungsbeispiel gemäß Figur 1 vorgesehene Aussparung 10 fehlt.

Im Übrigen entspricht diese Gestaltung dem Ausführungsbeispiel nach Figur 1.

Die besonderen Vorteile, die sich beim Fahren mit dem erfindungsgemäßen Tretroller ergeben, sind nachstehend ausführlich erläutert.

Wie in den Figuren 1 und 2 angedeutet, steht ein Fahrer, hier ein Rechtsfüßler, mit seinem Standfuß 14 auf der linken Seite des Trittbrettes, wobei sich der Hackenbereich des Standfußes 14 vorzugsweise nahe der Mittellinie M des Trittbrettes 1 befindet.

Zunächst befindet sich der Stoßfuß 15 noch auf dem Trittbrett 1. Aus dieser Position heraus führt der Fahrer mit seinem Stoßfuß 15 eine Abstoßbewegung in Richtung R durch, wie mit den Stoßfußstellungen 15' und 15'' angeordnet ist. Hiernach führt der Fahrer den Stoßfuß 15 auf den Trittbrettrand 13 und den leicht nach oben abgebogenen Flügel 11 zurück. In dieser Position stehen sich Standfuß 14 und Stoßfuß 15 des Fahrers etwa einander gegenüber, sodass der Fahrer einen sicheren Stand einnimmt, in welcher er bei der Weiterfahrt mittig vor der senkrechten Steuersäule 2 steht, sodass er den Tretroller zielgenau lenken kann.

Dank der hinteren Verjüngung des Trittbrettes 1 kann der Fahrer ohne wesentliche Änderung seiner Position auf dem Trittbrett sich mit seinem Stoßfuß 15 abstoßen, wie mit den gestrichelten Konturen 15' und 15'' angedeutet ist. Anders als bei üblichen Tretrollern kann der Fahrer also seinen Stoßfuß 15 seitlich und direkt in die Abstoßposition 15' bringen, wodurch die sonst notwendige kraftverzehrende Bewegung des Stoßfußes von hinten nach vorn ganz entfällt.

Da der Fahrer stets mittig vor der Steuersäule 2 steht, wird seine seitliche Neigung während des Abstoßvorganges ganz vermieden, auch dadurch, dass die Trittbrettoberfläche nur einen sehr geringen Abstand zur Fahrbahnoberfläche haben soll.

Die erfindungsgemäße Konstruktion ermöglicht, dass der Fahrer stets bequem und sicher auf dem Trittbrett steht, immer mittig vor der Steuersäule, und ohne große Anstrengungen größere Strecken bewältigen kann.

### Bezugszeichenliste

- 1: Trittbrett
- 2: Steuersäule
- 3: vordere Radgabel
- 4: vorderes Laufrad
- 5: Lenkstange
- 6: Strebe
- 7, 7': hintere Radgabel
- 8: Radachse
- 9: hinteres Laufrad
- 10: halbkreisförmige Aussparung
- 11, 11': Flügel als Fußauflagen
- 12, 12': Knicklinien
- 13, 13': seitliche Trittbrettränder
- 14: Kontur des Standfußes
- 15, 15', 15'': Kontur des Stoßfußes
- 16: Trittbrett
- 17: Vorderkante des Trittbrettes
- 18: Ausnehmung
- L: Länge der Trittfläche des Trittbrettes (1, 16)
- M: Mittellinie
- R: Richtung der Stoßbewegung
- S, S': Schnittpunkte
- α: Winkel des Trittbrettrandes (13') gegenüber der Mittellinie (M)

## Patentansprüche

1. Tretroller mit einem fahrbahnnahen Trittbrett, an dessen in Fahrtrichtung vorderem Ende eine Steuersäule mit einer horizontalen Lenkstange und einem Lenkrad drehbar angeordnet ist und an dessen in Fahrtrichtung hinterem Ende ein Laufrad vorgesehen ist,
**dadurch gekennzeichnet, dass** die vordere Breite des Trittbrettes (1, 16) der Breite zweier nebeneinander auf das Trittbrett (1,16)gestellter Füße (14, 15) und die Länge der Trittfläche des Trittbrettes (1, 16) der Länge der Füße (14, 15) des Fahrers entspricht und dass das vordere Ende des Trittbrettes (1, 16) symmetrisch zur Steuersäule (2) seitlich abstehende Flügel (11, 11') als Fußauflagen aufweist, welche gegenüber der zentralen Fläche des Trittbrettes (1, 16) derart nach oben abgewinkelt sind, dass sie den in Parkposition schräg gestellten Tretroller abstützen, in Schräglage bei Kurvenfahrten die Fahrbahn jedoch nicht berühren, und dass sich das Trittbrett (1, 16) in dem sich an die Flügel (11, 11') anschließenden Bereich nach hinten verjüngt.

2. Tretroller nach Anspruch 1,
**dadurch gekennzeichnet, dass** die Flügel (11, 11') gegenüber der übrigen Fläche des Trittbrettes (1, 16) um einen Winkel von etwa 8° nach oben abgewinkelt sind.

3. Tretroller nach Anspruch 1 oder 2,
**dadurch gekennzeichnet, dass** das Trittbrett (1) in seinem vorderen Bereich eine halbkreisförmige Aussparung (10) als Freiraum für das in einer Gabel (3) der Steuersäule (2) drehbar gelagerte Laufrad (4) aufweist.

4. Tretroller nach einem der Ansprüche 2 bis 3,
**dadurch gekennzeichnet, dass** das Trittbrett (1, 16) in seinem hinteren Bereich eine Ausnehmung (18) aufweist, in welcher das in einer Gabel (7, 7') drehbar gelagerte hintere Laufrad (9) angeordnet ist.

5. Tretroller nach einem der Ansprüche 1 bis 4,
**dadurch gekennzeichnet, dass** das Trittbrett (1, 16) in seinem vorderen Bereich eine Breite von 250 mm und in seinem hinteren Bereich eine Breite von 100 mm aufweist.

6. Tretroller nach einem der Ansprüche 1 bis 5,
**dadurch gekennzeichnet, dass** das Trittbrett (1, 16) aus dünnwandigem, vorzugsweise 8 mm starken Duraluminium besteht.
